# EUROPEAN PATENT SPECIFICATION

(11) **EP 2 492 188 B1**
(45) Date of publication and mention of the grant of the patent: **20.11.2013**
(21) Application number: 12155596.5
(22) Date of filing: 15.02.2012
(51) Int. Cl.: B63H 20/20, F16H 55/08

(54) **Power transmission device of outboard motor**
Leistungsübertragungsvorrichtung für Außenbordmotor
Dispositif de transmission de puissance de moteur hors-bord

(30) Priority: 24.02.2011 JP 2011038906
(43) Date of publication of application: 29.08.2012
(73) Proprietor: Suzuki Motor Corporation, Shizuoka-ken 432-8611 (JP)
(72) Inventor: Eidome, Yuki, Shizuoka-Ken, 432-8611 (JP)
(74) Representative: Klunker . Schmitt-Nilson . Hirsch

(56) References cited:
- US-A- 5 791 950
- US-A1- 2008 017 451
- US-A1- 2008 236 320

## Description

### BACKGROUND OF THE INVENTION

### Field of the Invention

The present invention relates to a power transmission device of an outboard motor which is provided with a bevel gear mechanism for transmitting driving force generated by an engine from a drive shaft of the prime mover to a propeller shaft.

### Description of the Related Art

In an outboard motor, it is necessary to transmit a driving force generated by an engine from a drive shaft which is coupled to an output shaft of the engine and extends downward to a propeller shaft which has a rear end attached to a propeller and extends horizontally. Thus, a bevel gear mechanism is interposed between the drive shaft and the propeller shaft.

The bevel gear mechanism is housed in a gear case which is to sink under the water together with the propeller. The gear case receives resistance of water during sailing, which causes power loss. In order to reduce such water resistance, it is required to make small the gear case to provide a smaller frontal projected area.

Accordingly, a Gleason type bevel gear with teeth having a spiral tooth shape is adopted in a bevel gear mechanism of a conventional outboard motor, as disclosed in Patent Document US 2008/0017451, Patent family member of JP 2008 025 603, considered as being the closest prior art and disclosing all the features of the preamble of claim 1. The diameter of the gear is reduced, thereby addressing the need for a reduction in gear case size.

However, a bevel gear with teeth having a Gleason type spiral tooth shape has lower efficiency of power transmission than a bevel gear with teeth having a straight tooth shape, due to power loss resulting from friction between the teeth of that bevel gear and teeth of another bevel gear which are engaged with each other. The lower efficiency of power transmission may cause a degradation in engine performance and fuel efficiency, which is a major problem particularly for low-power outboard motors.

In addition, fabrication of a bevel gear with teeth having a Gleason type spiral tooth shape requires specialized facilities, which increases the cost of manufacturing bevel gears.

### SUMMARY OF THE INVENTION

It is an object of the present invention, which has been made in consideration of the above-described circumstances, to provide a power transmission device of an outboard motor capable of achieving reduction in cost of manufacturing bevel gears, improving mechanical efficiency of power transmission of the outboard motor, and improving entire durability of bevel gears including drive and driven bevel gears without increasing working process.

The above and other objects can be achieved by the present invention by providing a power transmission device of a power transmission device for an outboard motor provided with an engine, the power transmission device including a drive shaft which is driven by the engine, and a propeller shaft which is driven by the drive shaft through a bevel gear mechanism, wherein the bevel gear mechanism includes a drive bevel gear which is mounted to the drive shaft and a forward driven bevel gear and a reverse driven bevel gear which are mounted around the propeller shaft so as to face each other and are engaged with the drive bevel gear, the forward driven bevel gear and the reverse driven bevel gear always engage with the drive bevel gear and are selectively connected to or disconnected from the propeller shaft through a clutch mechanism, the drive bevel gear, the forward driven bevel gear and the reverse driven bevel gear are configured as straight bevel gears, and only the drive bevel gear is provided with a crowning portion expanding a side surface portion of each teeth outwardly in a tooth thickness direction at an intermediate portion in a tooth width direction.

According to the present invention of the structure mentioned above, since the drive bevel gear and the driven bevel gear are constructed as straight bevel gears, cost of manufacturing the bevel gears can be reduced to be lower than a case in which Gleason type spiral bevel gears are used. The use of straight bevel gears also reduces power loss resulting from friction, which allows an improvement in mechanical efficiency of power transmission.

The nature and further characteristic features of the present invention will be made clearer from the following descriptions made with reference to the accompanying drawings.

### BRIEF DESCRIPTION OF THE DRAWINGS

In the accompanying drawings:
Fig. 1 is a left side view showing an outboard motor which is driven by an engine incorporated therein and is provided with a power transmission device according to a first embodiment of the present invention;
Fig. 2 is a sectional view, in an enlarged scale, showing a bevel gear mechanism of the power transmission device with a gear case in Fig. 1 partially cut away;
Fig. 3 is an illustrated sectional view showing a drive bevel gear in Fig. 2;
Fig. 4 is a sectional view showing a driven bevel gear in Fig. 2; and
Fig. 5 is an illustrated sectional view of a tooth taken along a generating line of a reference pitch cone of the drive bevel gear in Fig. 3.

### DESCRIPTION OF THE PREFERRED EMBODIMENTS

Hereunder preferred embodiments for carrying out the present invention will be described with reference to the accompanying drawings. Further, it is to be noted that the present invention is not limited to the embodiments, and also noted that terms "upper", "lower", "right", "left" and the like terms showing direction are used herein with reference to the illustration of the drawings or an actually mounted state of the outboard motor to a boat or like.

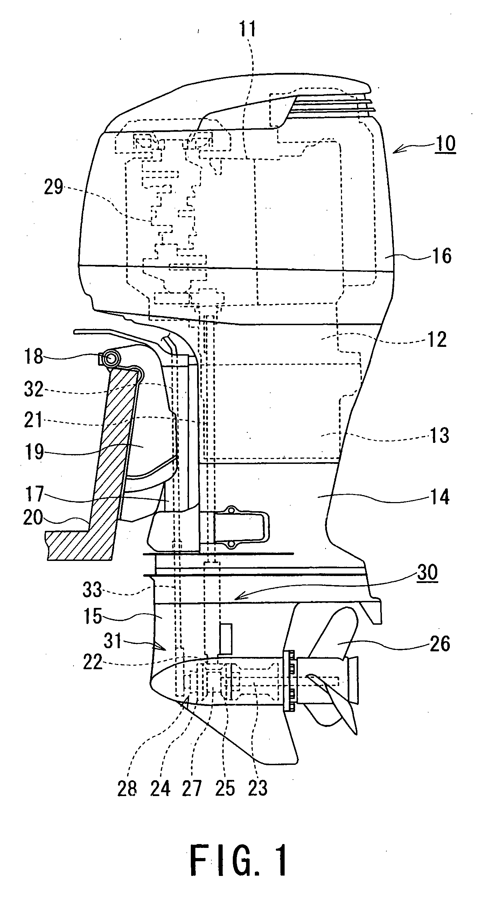

Fig. 1 is a left side view showing an outboard motor which uses a power transmission device according to a first embodiment of the present invention.

An outboard motor 10 shown in Fig. 1 includes an engine holder 12. An engine 11 is mounted on the engine holder 12. An oil pan block 13, a drive shaft housing 14 and a gear case 15, which are arranged one on top of another in this order, are mounted to a bottom of the engine holder 12. An engine cover 16 covers the engine 11, the engine holder 12 and the oil pan block 13.

A pilot shaft, not shown, is pivotally supported by a swivel bracket 17, by which the outboard motor 10 is supported to be pivotal horizontally. The swivel bracket 17 is supported by a clamp bracket 19 via a swivel shaft 18 so as to be pivotal vertically. The clamp bracket 19 is fixed to a stern portion 20 of a hull. The outboard motor 10 is attached to the hull to be pivotal horizontally and vertically with respect to the hull.

The outboard motor 10 is equipped with a power transmission 30 including a drive shaft 21 which is driven by the engine 11 and a propeller shaft 23 which is driven by the drive shaft 21 via a bevel gear mechanism 28 (a drive bevel gear 22, a forward driven bevel gear 24, and a reverse driven bevel gear 25, which will be described later).

In other words, as shown in Fig. 1, the engine 11 is vertically oriented so that a crankshaft 29 extends vertically.

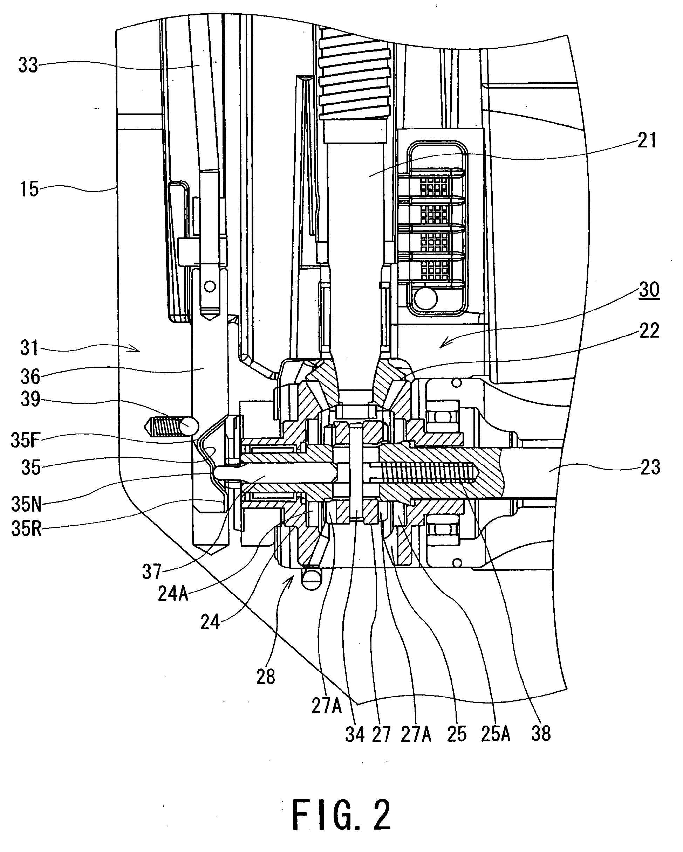

The drive shaft 21 extends vertically inside the engine holder 12, an oil pan block 13, a drive shaft housing 14, and a gear case 15 so as to transmit torque of the crankshaft 29 in the engine 11 to the drive shaft 21. As shown in Fig. 2, the drive bevel gear 22 is securely mounted to a lower end of the drive shaft 21. The drive bevel gear 22 always engages with the forward driven bevel gear 24 and the reverse driven bevel gear 25, which is fitted loosely on the propeller shaft 23 horizontally arranged inside the gear case 15 so as to be rotatable in mutually facing location.

A propeller 26 is fixed to one end of the propeller shaft 23, and a dog clutch 27 is fitted to the propeller shaft 23 so as to be rotatable together with the propeller shaft 23 and be slidable in an axial direction of the propeller shaft 23. That is, the dog clutch 27 is splined to the propeller shaft 23 so as to be movable in the axial direction of the propeller shaft 23 and is provided so as to be rotated together with the propeller shaft 23 via a dog pin 34. The dog clutch 27 includes dogs 27A at two ends in an axial direction.

The dog clutch 27 functions as a clutch mechanism and acts to selectively disconnect the forward driven bevel gear 24 and reverse driven bevel gear 25 from the propeller shaft 23. That is, the dogs 27A of the dog clutch 27 engage with either the dog 24A of the forward driven bevel gear 24 or the dog 25A of the reverse driven bevel gear 25. The torque of the engine 11 transmitted to the forward driven bevel gear 24 and reverse driven bevel gear 25 via the drive shaft 21 and the drive bevel gear 22 is transmitted to the propeller shaft 23 via the dog clutch 27, and the propeller 26 is rotated in the forward direction or reverse direction. In accordance with the forward or reverse rotation of the propeller 26, the hull obtains forward or reverse propulsive thrust.

The outboard motor 10 is provided with a shift mechanism.

The shift mechanism serves to switch the dog clutch 27 to a forward position (where the corresponding dog 27A of the dog clutch 27 engages with the dog 24A of the forward driven bevel gear 24) to place the propeller shaft 23 (the propeller 26) in a forward rotation state, to switch the dog clutch 27 to a reverse position (where the corresponding dog 27A of the dog clutch 27 engages with the dog 25A of the reverse driven bevel gear 25) to place the propeller shaft 23 in a reverse rotation state, or to switch the dog clutch 27 to a neutral position (where the dogs 27A of the dog clutch 27 do not engage with the dog 24A of the forward driven bevel gear 24 and the dog 25A of the reverse driven bevel gear 25) to place the propeller shaft 23 in a neutral state.

The shift mechanism includes a dog clutch actuator 31.

The dog clutch actuator 31 is intended to actuate, i.e., linearly move, the dog clutch 27. The dog clutch actuator 31 includes a pull-rod 33, a shift cam 36, a push rod 37, and a clutch spring 38.

The pull-rod 33 is provided inside the gear case 15 so as to be movable vertically. As shown in Fig. 1, the pull-rod 33 is directly coupled to a clutch rod 32 near a joint between the drive shaft housing 14 and the gear case 15. The clutch rod 32 is inserted in the pilot shaft, not shown, pivotally supported by the swivel bracket 17 and is operated to move up or down by a shift operation lever, not shown, placed in the hull.

As shown in Fig. 2, the shift cam 36 is coupled to a lower end of the pull-rod 33 and has a cam surface 35, which will be described hereinlater. The push rod 37 is provided inside the propeller shaft 23 so as to be movable in the axial direction of the propeller shaft 23 and is disposed between the cam surface 35 of the shift cam 36 and the dog pin 34 of the dog clutch 27. The clutch spring 38 is disposed inside the propeller shaft 23 so as to apply an urging force to the push rod 37 via the dog pin 34 to thereby bring the push rod 37 into contact with the cam surface 35 of the shift cam 36.

A forward position 35F, a neutral position 35N, and a reverse position 35R are provided sequentially from top to bottom at the cam surface 35 of the shift cam 36. The shift cam 36 is positioned at each of the positions by a detent mechanism 39. The forward position 35F, neutral position 35N, and reverse position 35R of the cam surface 35 are for positioning the dog clutch 27 at the respective shift positions, i.e., the forward position, neutral position, and reverse position.

The operated shift operation lever, not shown, vertically moves the pull-rod 33 via the clutch rod 32, which causes the push rod 37 to move in an axial direction while following the cam surface 35 of the shift cam 36. When the push rod 37 comes into contact with the cam surface 35 of the shift cam 36 at the forward position 35F, the corresponding dog 27A of the dog clutch 27 engages with the dog 24A of the forward driven bevel gear 24 due to action of the clutch spring 38, and the dog clutch 27 is switched to the forward position. Accordingly, driving force of the drive shaft 21 is transmitted to the propeller shaft 23 via the drive bevel gear 22, forward driven bevel gear 24, and dog clutch 27. The propeller 26 is then rotated in the forward direction and the hull is moved forward.

Further, when the push rod 37 comes into contact with the cam surface 35 of the shift cam 36 at the reverse position 35R, the corresponding dog 27A of the dog clutch 27 engages with the dog 25A of the reverse driven bevel gear 25 due to action of the push rod 37, and the dog clutch 27 is switched to the reverse position. Accordingly, the driving force of the drive shaft 21 is transmitted to the propeller shaft 23 via the drive bevel gear 22, reverse driven bevel gear 25, and dog clutch 27. The propeller 26 is then rotated in the reverse direction and the hull is moved backward.

Furthermore, when the push rod 37 comes into contact with the cam surface 35 of the shift cam 36 at the neutral position 35N, the dogs 27A of the dog clutch 27 disengage from the dog 24A of the forward driven bevel gear 24 and the dog 25A of the reverse driven bevel gear 25 due to the action of the push rod 37 or clutch spring 38, and the dog clutch 27 is switched to the neutral position. Accordingly, the driving force of the drive shaft 21 is not transmitted to the propeller shaft 23 and propeller 26, and the propeller 26 stops the hull from being propelled.

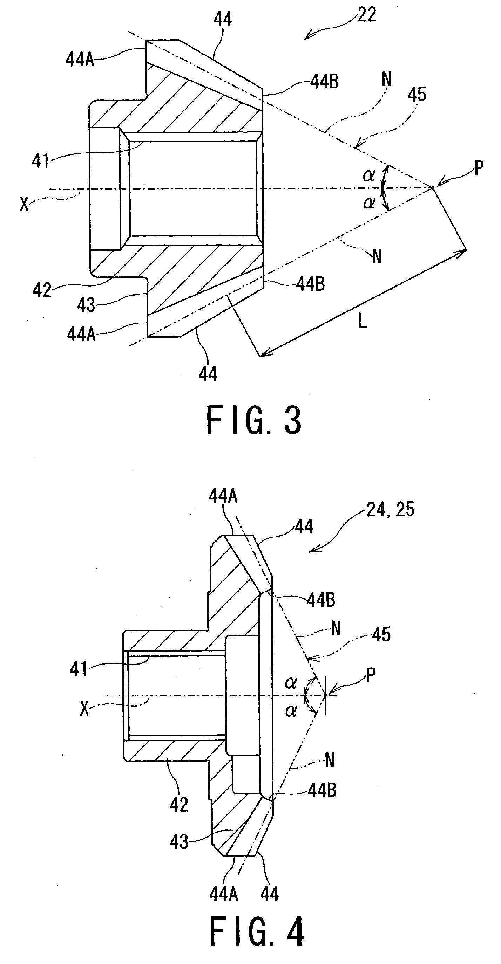

As shown in Fig. 3, the drive bevel gear 22 includes a shaft bearing portion 42 having a shaft hole 41 in which the drive shaft 21 is inserted and a beveled portion 43 which is formed integrally with the shaft bearing portion 42. A plurality of teeth 44 are circumferentially formed at predetermined intervals at the beveled portion 43. The plurality of teeth 44 are formed to have a straight tooth shape. A generating line N of a reference pitch cone 45 is inclined at an angle of α relative to an axis X of the drive bevel gear 22. The forward driven bevel gear 24 and the reverse driven bevel gear 25 which engage with the drive bevel gear 22 have substantially the same configurations as that of the drive bevel gear 22 except for a crowning portion 46 as shown in Fig. 4.

The drive bevel gear 22, the forward driven bevel gear 24, and the reverse driven bevel gear 25 are formed such that the teeth 44 have a straight tooth shape. Although the bevel gears are thus manufactured in a precision forging process, the bevel gears may be manufactured in a gear cutting process.

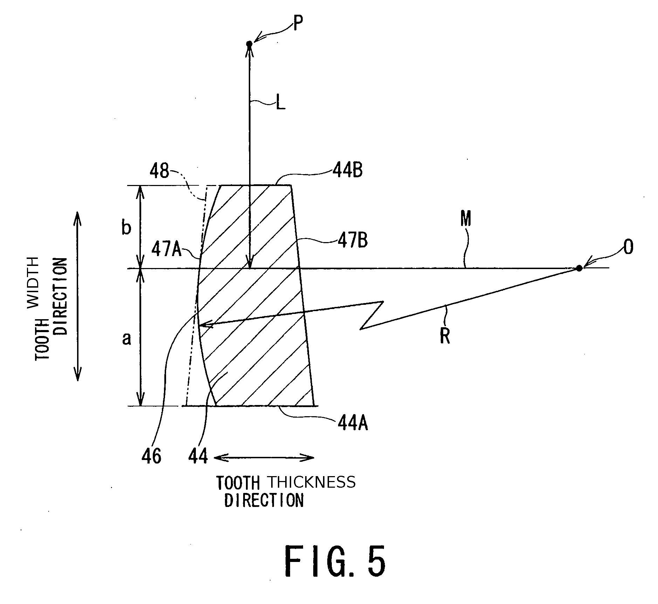

As shown in Fig. 5, the drive bevel gear 22 includes a crowning portion 46 that is expanding outwardly in a tooth thickness direction at an intermediate portion in a tooth width direction at each of sides (one side 47A and the other side 47B) of each tooth 44. The crowning portions 46 at the one side 47A and the other side 47B of each tooth 44 are formed to have different specifications (either one of the one side 47A and the other side 47B may not include the crowning portion 46). In the present embodiment, the crowning portion 46 is formed, for example, only at the one side 47A of each tooth 44 of the drive bevel gear 22 and is not formed at the other side 47B. The reason why the crowning portion 46 is formed only at the one side 47A of the tooth 44 of the drive bevel gear 22 is because only the one side 47A is to come into contact with the teeth 44 of the forward driven bevel gear 24 and the reverse driven bevel gear 25.

Reference numeral 48 in Fig. 5 denotes a basic tooth shape for the tooth 44. The other side 47B of each tooth 44 of the drive bevel gear 22, the one side 47A and the other side 47B of each tooth 44 of the forward driven bevel gear 24, and the one side 47A and the other side 47B of each tooth 44 of the reverse driven bevel gear 25 are formed to have the basic tooth shape 48.

The crowning portion 46 formed at the one side 47A of each tooth 44 of the drive bevel gear 22 is formed in a shape of a single arc of a circle with a radius R. A center of the arc (a crowning center O) is set to be closer to a small diameter end 44B of the drive bevel gear 22. That is, supposing that a letter "a" be a distance of a straight line M which extends through the crowning center O and is parallel to the tooth thickness direction from a large diameter end 44A of the tooth 44 and a letter "b" be a distance from the small diameter end 44B, the distances a and b are set to satisfy a > b. A distance L (Figs. 3 and 5) is a distance between the straight line M and a gear center P (i.e., an apex of the reference pitch cone) of the drive bevel gear 22, and a position at the distance L is set as a "crowning center position" relative to the gear center P of the drive bevel gear 22.

According to the configuration or structure of the described embodiment of the present invention will achieve the following advantageous effects (1) to (6).
(1) Since the drive bevel gear 22, the forward driven bevel gear 24, and the reverse driven bevel gear 25 are formed as straight bevel gears, the cost for manufacturing the bevel gears can be reduced to be lower than a case of using Gleason type spiral bevel gears. The use of the straight bevel gears also reduces power loss resulting from the friction between the teeth 44 of the drive bevel gear 22 and the teeth 44 of the driven bevel gears 24 and 25, resulting in the improvement in mechanical efficiency of power transmission
(2) Since the drive bevel gear 22 according to the first embodiment includes the crowning portion 46 at the one side 47A of each tooth 44, the following advantageous effects can be achieved.
   That is, when the driving force is transmitted from the drive bevel gear 22 to the forward driven bevel gear 24 and reverse driven bevel gear 25, the driving reaction force (reaction force of the driving force) from the forward driven bevel gear 24 and the reverse driven bevel gear 25 acts on the drive bevel gear 22 as components of force in a thrust direction along the axis X of the drive bevel gear 22 as well as components of force in the radial direction.
   Furthermore, since straight bevel gear has a larger component of force in a radial direction than a Gleason type bevel gear, the components of force in the radial direction cause the drive bevel gear 22 to be separated from the forward driven bevel gear 24 and reverse driven bevel gear 25 in the radial direction and be shifted in position thereof.
   At this time, the teeth 44 of the drive bevel gear 22 and the teeth 44 of the forward driven bevel gear 24 or reverse driven bevel gear 25 have a smaller area of contact on the small diameter end 44B side to reduce a total area of contact between the teeth 44. For this reason, contact pressure on the large diameter end 44A side, in particular, increases, and hence, reduce the durability of the drive bevel gear 22, the forward driven bevel gear 24, and the reverse driven bevel gear 25.
   Then, in view of the above fact, in the present embodiment, the crowning portion 46 is formed at the one side 47A of each of the teeth 44 of the drive bevel gear 22 that engage with the teeth 44 of the forward driven bevel gear 24 and reverse driven bevel gear 25. This allows an increase in the area of contact between the teeth 44 of the drive bevel gear 22 and the teeth 44 of the forward driven bevel gear 24 and the reverse driven bevel gear 25. The contact pressure between the teeth 44 of the drive bevel gear 22 and the teeth 44 of the forward driven bevel gear 24 and the reverse driven bevel gear 25 can be reduced. As a result, the durability of the drive bevel gear 22 and the forward driven bevel gear 24 and the reverse driven bevel gear 25 can be increased as a whole. Therefore, it is not necessary to increase or enhance the rigidity of the gear case 15 that accommodates the drive bevel gear 22, the forward driven bevel gear 24, and the reverse driven bevel gear 25 to thereby prevent the drive bevel gear 22 from being shifted in position, thus being notnecessary to increase the size of the gear case 15.
(3) Since the crowning portion 46 is provided in the drive bevel gear 22 that engages with both the forward driven bevel gear 24 and the reverse driven bevel gear 25, the crowning portion 46 need not be provided in each of the forward driven bevel gear 24 and the reverse driven bevel gear 25, thereby reducing an increase in the number of man-hours for machining of the respective bevel gears 22, 24 and 25
(4) In the crowning portion 46 formed at the one side 47A of each tooth 44 of the drive bevel gear 22, the crowning center O is set to be closer to the small diameter end 44B of the tooth 44 (one end 44B having a diameter smaller than that of the other end 44A). According to this setting, the one side 47A of each tooth 44 of the drive bevel gear 22 is greatly crowned on the large diameter end 44A side. An area of contact on the large diameter end 44A side at the one side 47A can be increased. As a result, the contact pressure on the large diameter end 44A side at the one side 47A of the tooth 44 of the drive bevel gear 22 can be reduced, and the durability of the drive bevel gear 22 can be increased.
(5) In the present embodiment, the crowning portion 46 is formed at a side (the one side 47A) of each tooth 44 in the drive bevel gear 22 that is precisely forged. A tooth shape can be easily adjusted at the time of precisely forging the drive bevel gear 22. Accordingly, the crowning portion 46 is easy to form at a side of each tooth 44 of the drive bevel gear 22, and the accuracy of shaping a tooth including the crowning portion 46 can be improved.
(6) Since only the one side 47A of each tooth 44 of the drive bevel gear 22 comes into contact with the teeth 44 of the forward driven bevel gear 24 and the reverse driven bevel gear 25, the crowning portion 46 is formed only at the one side 47A. The formation of the crowning portion 46 reduces the thickness of the tooth 44, and accordingly, in the drive bevel gear 22, the crowning portion 46 is provided only at the one side 47A of each tooth 44, and the other side 47B is formed to have the basic tooth shape 48. Thus, the tooth 44 can provide a favorable thickness and the strength of the drive bevel gear 22 can be ensured without reduction.

In addition, according to the provision of the crowning portion 46 only at the one side 47A of each tooth 44 of the drive bevel gear 22, the number of man-hours for machining the teeth 44 of the drive bevel gear 22 can be reduced by half , and the cost of manufacturing the drive bevel gear 22 can be also reduced.

It is to be noted that the present invention is not limited to the described embodiment and many other changes and modifications may be made without departing from the scopes of the appended claims.

## Claims

1. A power transmission device (30) of an outboard motor including an engine (11), the power transmission device comprising:
a drive shaft (21) which is driven by the engine (11); and
a propeller shaft (23) which is driven by the drive shaft (21) through a bevel gear mechanism (28),
wherein the bevel gear mechanism (28) includes a drive bevel gear (22) which is mounted to the drive shaft (21) and a forward driven bevel gear (24) and a reverse driven bevel gear (25) which are mounted around the propeller shaft (23) so as to face each other and are engaged with the drive bevel gear (22),
the forward driven bevel gear (24) and the reverse driven bevel gear (25) always engage with the drive bevel gear (22) and are selectively connected to or disconnected from the propeller shaft (23) through a clutch mechanism (27), **characterized in that**
the drive bevel gear (22), the forward driven bevel gear (24) and the reverse driven bevel gear (25) are configured as straight bevel gears, and
only the drive bevel gear (22) is provided with a crowning portion expanding a side surface portion of each teeth outwardly in a tooth thickness direction at an intermediate portion in a tooth width direction.

2. The power transmission device of an outboard motor according to claim 1, wherein the crowning portions having different specifications are provided at one side and another side, respectively, of each tooth of the drive bevel gear (22).

3. The power transmission device of an outboard motor according to claim 1, wherein the crowning portion is formed in a shape of a single arc portion of a circle, and a center of the arc is set to be closer to one end portion of the bevel gear having a diameter smaller than that of another end thereof.

4. The power transmission device of an outboard motor according to claim 1, wherein the crowning portion is provided only at one side of each tooth of the drive bevel gear (22).

## Patentansprüche

1. Kraftübertragungsvorrichtung (30) eines Außenbordmotors, der eine Antriebsmaschine (11) enthält, wobei die Kraftübertragungsvorrichtung aufweist:
eine Antriebswelle (21), die von der Antriebsmaschine (11) angetrieben wird; und
eine Schraubenwelle (23), die von der Antriebswelle (21) über einen Kegelradmechanismus (28) angetrieben wird,
wobei der Kegelradmechanismus (28) ein Antriebskegelrad (22) enthält, das an der Antriebswelle (21) gelagert ist, und ein vorwärts angetriebenes Kegelrad (24) sowie ein rückwärts angetriebenes Kegelrad (25) enthält, die um die Schraubenwelle (23) herum angebracht sind, so dass sie einander gegenüberliegen und mit dem Antriebskegelrad (22) in Eingriff stehen,
wobei das vorwärts angetriebene Kegelrad (24) und das rückwärts angetriebene Kegelrad (25) dauernd mit dem Antriebskegelrad (22) in Eingriff stehen und selektiv über einen Kupplungsmechanismus (27) mit der Schraubenwelle (23) verbunden oder von dieser getrennt sind,
**dadurch gekennzeichnet, dass**
das Antriebskegelrad (22), das vorwärts angetriebene Kegelrad (24) und das rückwärts angetriebene Kegelrad (25) als gradverzahnte Kegelräder konfiguriert sind, und
nur das Antriebskegelrad (22) mit einem balligen Abschnitt ausgestattet ist, der einen Seitenoberflächenabschnitt sämtlicher Zähne in Zahn-Dickenrichtung in einem Zwischenbereich in Zahnbreitenrichtung ausweitet.

2. Kraftübertragungsvorrichtung eines Außenbordmotors nach Anspruch 1, bei der die balligen Abschnitte verschiedener Spezifikationen auf einer Seite bzw. der anderen Seite jedes Zahns des Antriebskegelrads (22) vorgesehen sind.

3. Kraftübertragungsvorrichtung eines Außenbordmotors nach Anspruch 1, bei der der ballige Abschnitt in einer Form eines einzelnen Bogenabschnitts eines Kreises ausgeformt ist, und eine Mitte des Bogens näher bei einem Endbereich des Kegelrads gelegen ist, der einen kleineren Durchmesser besitzt als der andere Endbereich.

4. Kraftübertragungsvorrichtung eines Außenbordmotors nach Anspruch 1, bei dem der ballige Abschnitt nur an einer Seite jedes Zahns des Antriebskegelrads (22) vorgesehen ist.

## Revendications

1. Dispositif de transmission de puissance (30) d'un moteur hors-bord incluant un moteur (11), le dispositif de transmission de puissance comprenant :
un arbre d'entraînement (21) entraîné par le moteur (11), et
un arbre d'hélice (23) entraîné par l'arbre d'entraînement (21) par le biais d'un mécanisme à engrenage conique (28) ;
dans lequel le mécanisme à engrenage conique (28) inclut un engrenage conique d'entraînement (22) qui est monté sur l'arbre d'entraînement (21) ainsi qu'un engrenage conique entraîné vers l'avant (24) et un engrenage conique entraîné vers l'arrière (25) qui sont montés autour de l'axe d'hélice (23) de manière à être face à face et être en prise avec l'engrenage conique d'entraînement (22) ;
l'engrenage conique entraîné vers l'avant (24) et l'engrenage conique entraîné vers l'arrière (25) sont toujours en prise avec l'engrenage conique d'entraînement (22) et sont reliés de manière sélective à l'arbre d'hélice (23), ou désolidarisés de celui-ci, par le biais d'un embrayage (27), **caractérisé en ce que**
l'engrenage conique d'entraînement (22), l'engrenage conique entraîné vers l'avant (24) et l'engrenage conique entraîné vers l'arrière (25) sont configurés sous la forme d'engrenages coniques droits, et
seul l'engrenage conique d'entraînement (22) est doté d'une partie bombée étendant une partie superficielle latérale de chaque dent vers l'extérieur dans une direction d'épaisseur de dent au niveau d'une partie intermédiaire dans une direction de largeur de dent.

2. Dispositif de transmission de puissance d'un moteur hors-bord selon la revendication 1, dans lequel les parties bombées présentant des spécifications différentes sont prévues respectivement de chaque côté de chaque dent de l'engrenage conique d'entraînement (22).

3. Dispositif de transmission de puissance d'un moteur hors-bord selon la revendication 1, dans lequel la partie bombée se présente sous la forme d'une partie arquée unique d'un cercle, et un centre de l'arc est réglé de manière à être plus proche d'une première extrémité de l'engrenage conique présentant un diamètre inférieur par rapport à l'autre extrémité de celui-ci.

4. Dispositif de transmission de puissance d'un moteur hors-bord selon la revendication 1, dans lequel la partie bombée n'est prévue que sur un côté de chaque dent de l'engrenage conique d'entraînement (22).
